# EUROPEAN PATENT SPECIFICATION

(11) **EP 0 320 005 B1**
(45) Date of publication and mention of the grant of the patent: **08.06.1994**
(21) Application number: 88120639.5
(22) Date of filing: 09.12.1988
(51) Int. Cl.: C08F 293/00, C08F 283/06, C08L 53/00

(54) **Fluorinated polymers and copolymers containing perfluoropolyether blocks**
Fluorierte Polymere und Copolymere enthaltende Perfluorpolyätherblöcke
Polymères et copolymères fluorés contenant des blocs de perfluoropolyéthers

(30) Priority: 10.12.1987 IT 2292987
(43) Date of publication of application: 14.06.1989
(73) Proprietor: AUSIMONT S.p.A., I-20100 Milano (IT)
(72) Inventor: Moggi, Giovanni, I-20124 Milan (IT); Marchionni, Giuseppe, I-20133 Milan (IT)
(74) Representative: Barz, Peter, Dr.

(56) References cited:
- EP-A- 0 211 251
- EP-A- 0 222 201
- FR-A- 2 107 356

## Description

The present invention relates to a process for the radical polymerization of fluoroolefins, either alone or in admixture with non-fluorinated olefins, the process being carried out in the presence of perfluoropolyethers having bromine-containing end groups and being represented by the following general formula: 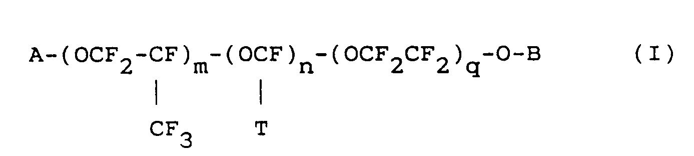
wherein: T = F or CF₃; m, n and q are integers, including zero, m+n+q ranges from 2 to 100; A and B, which are either the same or different from each other, are selected from: 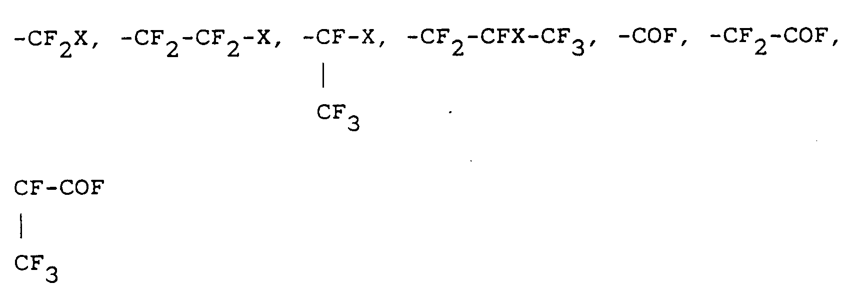
X being bromine or fluorine, provided that at least one end group contains Br.

Perfluorooxyalkylene units 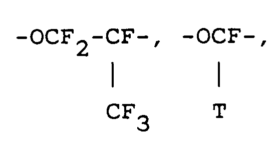
-OCF₂CF₂- are distributed at random along the perfluoropolyether chain. The perfluoropolyethers having brominated end groups for use in the present invention are liquid products which, preferably, have an average molecular weight ranging from 400 to 10000, particularly from 600 to 8000.

They are obtainable according to the process disclosed in EP-A-195946 of applicant, and are obtainable as mixtures of products having different molecular weights, containing bromine at one end or at both ends.

Particularly suitable products are those having the following general formulae:

CF₃(OCF₂)ₙ(OCF₂CF₂)_{q}OCF₂CF₂Br (II)

BrCF₂(OCF₂)ₙ(OCF₂CF₂)_{q}OCF₂CF₂Br (III)

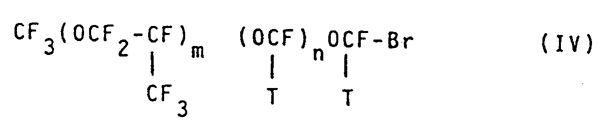

where T = F or CF₃.

For convenience, the brominated perfluoropolyethers of class (II) will be referred to as R_{f}Br, those of class (III) as BrR'_{f}Br and those of class (IV) as R''_{f}Br.

According to the present invention the perfluoropolyethers, as they act as chain transfer agents in the radical polymerization process of fluoroolefins, give rise to the formation of new polymeric products containing, besides at least one terminal Br atom, one or more blocks having a perfluoropolyether structure, which are linked to sequences of perfluoroolefinic units.

This particular structure of the polymeric or oligomeric products according to the present invention results in a complex of specific properties which are of great interest in the field of fluorinated polymers.

FR-A-2107356 describes similar products which due to their preparation by polymerization of ethylenically unsaturated compounds in the presence of perfluoropolyether-polyperoxides as radical initiators do, however not contain any Br atoms. Therefore they are not suitable for use as, e.g. additives for fluoroelastomers.

According to known processes, fluorinated telomers and polymers are generally prepared from the corresponding monomers by means of radical polymerization in the presence of a starter, operating in an aqueous emulsion, in bulk or in the presence of a solvent capable of acting as a chain transfer or telogen agent for molecular weight regulation and homogeneity control (molecular weight distribution).

The molecular weight modifiers according to the art, particularly in the case of high molecular weight polymers, are, generally, not capable of modifying specific properties of practical significance exhibited by the fluorinated polymer, such as the glass transition temperature, the compatibility with fluorinated fluids and the processability, in the case of fluoroelastomers. This is due to the fact that the end groups of the polymeric chains, resulting from the chain transfer mechanism of the molecular weight regulation, have a negligible mass in comparison to the one of the polymeric chain and, therefore, cannot significantly influence the properties of the latter, in the sense that it imparts to the polymer obtained the specific characteristics which are typical of the compound utilized as chain transfer agent.

Among the fluorinated olefins which are utilizable in the present invention, the following are particularly suited: vinylidene fluoride (VDF), tetrafluoroethylene (TFE), VDF/hexafluoropropene (PFP) mixtures, VDF/PFP/TFE mixtures, VDF/TFE mixtures, C₂H₄/TFE mixtures, C₃H₆/TFE mixtures. The fluoroolefin mixtures can, furthermore, contain perfluoroalkylvinylethers such as perfluoromethylvinylether, 2-bromotetrafluoroethyltrifluoromethylvinylether, hexafluorobutadiene and CF₂=CFCl.

When representing the fluoroolefinic unit or units of the polymeric chain by P, the polymers of the present invention have the following formulae:

R_{f}-(P)ᵣ-Br or R''_{f}-(P)ᵣ-Br (V)

Br(P)ᵣ-R′_{f}-(P)ᵣBr (VI)

wherein r indicates the total number of monomeric units derived from one or more (fluoro)olefins and ranges from 5 to 5000, preferably from 10 to 1000.

The weight ratio of perfluoropolyether chain R_{f} or R′_{f} or R˝_{f} to fluoroolefinic chain (P)ᵣ preferably ranges from 4/1 to 1/50, particularly from 1/1 to 1/20.

The polymers of general formulae V and VI can be prepared by means of the usual polyaddition polymerization techniques, in the presence of a radical starter, for example, by operating in solution (preferred solvents being chlorofluorohydrocarbons, in particular, trifluorotrichloroethane (FC 113)); or in an aqueous emulsion in the presence of a, preferably, fluorinated surfactant such as ammonium perfluorooctanoate.

When operating in a solvent, it is preferable to use an organic peroxide such as those commonly used in radical polymerization processes as a starter. The polyaddition reaction temperature generally ranges from 30 to 130°C, depending on the type of starter employed. In an aqueous emulsion it is possible to use a persulphate alone or as component of a redox system, at temperatures of from 10 to 95°C.

With monomers which are gaseous at the reaction temperature, a pressure suitable for obtaining a monomer concentration, which is sufficient for a satisfactory reaction rate, is employed.

When the polymerization process is conducted in more than one step, it is possible to obtain block copolymers with alternating perfluoropolyether chains and chains of olefinic units.

With the present invention, it is possible to modify the macromolecular structures of known types of polymers and to advantageously vary the properties thereof, as the polymers and telomers so obtained exhibit, in the same macromolecule, sequences having a perfluoropolyether structure, and sequences having repeating (fluoro)olefinic units, for example:

CF₃(OCF₂)ₙ(OCF₂CF₂)_{q}OCF₂CF₂-(CF₂CF₂)ᵣ-Br (VII).

This type of polymer can be obtained starting from a brominated perfluoropolyether having formula II.

The structure of formula VII was revealed by NMR analysis carried out in the solid state.

When a mixture of VDF and PFP and a perfluoropolyether of formula II are used in the polymerization, it is possible to obtain an elastomeric product having the general formula:

CF₃(OCF₂)ₙ(OCF₂CF₂)_{q}OCF₂CF₂-[(VDF)_{4w}(PFP)_{w}]-Br (VIII)

wherein the VDF and PFP units are distributed at random in the fluoroolefinic chain, with the exception of the sequence -PFP-PFP-, and w ranges from 2 to 1000.

The NMR analysis of said products permits a qualitative and quantitative analysis of their microstructure by determining the values of n, q and w as well as the number average molecular weight from an examination of the end groups.

The oligomer and polymer products according to the present invention can be advantageously utilized as additives in fluoroelastomeric compositions based on conventional fluoroelastomers in order to improve some properties thereof.

From EP-A-222201 of applicant, it is known that brominated perfluoropolyethers of general formula I can be mixed, in the vulcanizable fluoroelastomeric compositions, with peroxides. The mixture is then co-vulcanized in a mould at 160 to 180°C . A better processability of the mixture and easier removal of the vulcanizate from the mould are, thus, achieved. However, since the bond between brominated perfluoropolyether and fluoroelastomeric chain is formed during the vulcanization step at a high temperature (150 to 180°C), said technique involves the risk of losing brominated perfluoropolyether due to volatilization before it can co-vulcanize with the fluoroelastomer. Consequently, brominated perfluoropolyethers having a high molecular weight of at least 1200 should, preferably, be used for said application.

For a starting product, the present invention permits the use of a low molecular weight brominated PFPE since, owing to the addition of fluoroolefins, it is possible to obtain a product having a very low volatility and a high thermal stability comparable to or higher than that of the basic fluoroelastomer.

The products obtained according to the present invention, when used as additives of fluoroelastomers conforming to the above-mentioned application, are utilized in an amount ranging from 0.1 to 10 parts by weight per 100 parts by weight of fluoroelastomer, preferably from 1 to 8 parts by weight.

The polymeric or oligomeric products prepared according to the present invention exhibit two glass transition temperatures (Tg), one of which is below -100°C and is due to the perfluoropolyether block while the other, having a higher value, is due to the sequence of fluoroolefinic units. In the case of sequence VDF, PFP with a VDF/PFP molar ratio of 4/1, said temperature is about -24°C.

The following examples merely serve to illustrate the present invention.

### EXAMPLE 1

A 300 ml autoclave was charged with 28 ml of trichlorotrifluoroethane (FC 113), 10 g of brominated perfluoropolyether of formula (II) (R_{f}Br) with a q/n ratio of about 5 and with an average molecular weight of 1200 and, furthermore, 0.7 g of di-tert-butylperoxide (DTBP) and 10 g of vinylidene fluoride and the mixture was heated to 130°C. A maximum pressure of 20 atm. was reached which, subsequently, decreased. The test was stopped after 50 minutes, the autoclave was vented to atmospheric pressure and a suspension of polymer in the solvent was obtained. After filtration the polymer was washed with FC 113 to remove any unreacted R_{f}Br, if any. It was then dried and analyzed.

The differential thermal analysis (DSC) revealed the presence of a glass transition at -140°C due to group R_{f} and of another glass transition at -50°C due to sequence VDF, and a melting point at 161°C, also due to sequence VDF.

The NMR analysis, carried out in a mixture of DMF (4 parts) and FC 113 (1 part), permitted attribution of the following structural formula:

CF₃(OCF₂)ₙ(OCF₂CF₂)_{q}OCF₂CF₂-(CH₂CF₂)ᵣ-Br (IX)

wherein r = 15 and wherein q and n correspond to the values of the starting perfluoropolyether.

The weight ratio of perfluoropolyether block R_{f} to chain -(CH₂CF₂)ᵣ was about 1.2/1.

### EXAMPLE 2

The procedure of example 1 was followed but, as a solvent, a mixture of perfluoroalkanes having a boiling point of about 80°C and 5 g of a brominated perfluoropolyether of general formula II with an n/q ratio equal to 1/10 and an average molecular weight of 3200, 0,40 g of DTBP and 5 g of CH₂=CF₂ was employed.

The polymer was washed with solvent FC 113, dried and analyzed.

In this case as well the differential thermal analysis revealed the presence of a glass transition at -144°C due to group R_{f}, a glass transition at -49°C due to sequence of units VDF and a melting point of 161°C, also due to repeating units VDF and corresponding to the one of the polyvinylidene fluoride.

The formula was the following:

CF₃(OCF₂)ₙ(OCF₂CF₂)_{q}OCF₂CF₂-(CH₂CF₂)ᵣ-Br (X)

wherein r = 25 and wherein q and n correspond to the values of the starting perfluoropolyether.

### EXAMPLE 3 (COMPARATIVE TEST)

The procedure of example 1 was followed but without perfluoropolyether R_{f}Br.

A polymer was obtained which, when subjected to ¹⁹F NMR analysis and to differential thermal analysis (DSC), exhibited the characteristics of polyvinylidene fluoride with a melting point of 161°C and only one glass transition temperature (Tg) at -49°C.

The absence of a Tg at about -140°C proves that this Tg is due - as described in examples 1 and 2 - to the R_{f} group which was not present here.

### EXAMPLE 4

The procedure of example 1 was followed but a 3 liter autoclave was employed. The monomer mixture consisted of 100 g VDF and of 120 g PFP. It was heated to 50°C in the presence of 3 g of Perkadox 16 ^{(R)}, corresponding to di(4-tert-butylcyclohexyl)peroxycarbonate, as a radical starter, 500 ml of FC 113 and 55 g of fluoropolyether of formula III, having a molecular weight equal to 800 and a q/n ratio of about 4.

The resulting copolymer, having elastomeric consistence, was isolated by evaporation of the residual solvent and subsequently washed with FC 113 and hexane.

The differential thermal analysis revealed a glass transition at -142°C and another glass transition at -25°C due, respectively, to group R_{f} and to sequence VDF/PFP, which were in a molar ratio ranging approximately from 4 to 1.

The ¹⁹F NMR analysis confirmed the following structure:

Br(VDF,PFP)ᵣ[-CF₂(OCF₂)ₙ(OCF₂CF₂)_{q}OCF₂CF₂]-(VDF,PFP)ᵣ′-Br (XI)

wherein r+r′ = 70, the VDF/PFP molar ratio is equal to 4/1 and n and q have the values of the starting perfluoropolyether.

The weight ratio of perfluoropolyether block to the sum of units VDF+PFP is about 1/8.2.

### EXAMPLE 5 (Preparation of modified PTFE)

A 3 liter autoclave, equipped with a stirrer, was charged with 500 ml of 1,1,2-trichlorotrifluoroethane (FC 113), 75 g of a brominated PFPE of general formula (II) having an n/q ratio = 1/3 and with a number average molecular weight equal to 660, determined by ¹⁹F NMR analysis. After addition of 3.5 g of di-tert-butylperoxide (DTBP) and 100 g of tetrafluoroethylene, the mixture was heated to 130°C. A maximum pressure of 20 atm. was reached. After 30 minutes stirring was stopped and the autoclave was cooled. The product was filtered, washed with FC 113 and dried. The product was in the form of a very fine white powder.

The product was subjected to ¹⁹F NMR analysis (solid state), which revealed a structure represented by the following formula:

CF₃(OCF₂)ₙ(OCF₂CF₂)_{q}OCF₂CF₂-(CF₂CF₂)ᵣ-Br

having an n/q ratio equal to 1/3; units (CF₂CF₂)ᵣ representing, in total, 90% by weight of product (r = about 50).

Tg was -148°C due to the R_{f} moiety. No Tg due to crystalline units (CF₂CF₂)ᵣ was observed. The melting points were 316°C (first melting) and 300°C (crystallization), which are typical for low molecular weight PTFE.

### EXAMPLE 6

The procedure of example 4 was used, using 110 g of a monomer mixture consisting of 35% by moles of PFP and 65% of VDF (operating at 120°C in the presence of di-tert-butylperoxide as a radical starter) and 27 g of perfluoropolyether of general formula II with a q/n ratio of about 4 and a molecular weight of about 800.

The copolymer, having the appearance of an elastomer, exhibited a Tg of about -140°C due to the perfluoropolyether sequences and another Tg at -26°C due to the VDF-PFP sequences in a molar ratio equal to 4/1.

The copolymer, which had an elastomeric appearance, exhibited the following structure as revealed by NMR analysis of ¹⁹F:

CF₃(OCF₂)ₙ(OCF₂CF₂)_{q}OCF₂CF₂-[(VDF,PFP)ᵣ]-Br

with a q/n ratio of about 4, r = about 9, the VDF/PFP molar ratio being equal to 4/1.

Indicating the formula more simply:

R′_{f}-(VDF)₄ᵣ(PFP)ᵣBr,

the weight ratio between R′_{f} and the remaining macromolecule was equal to about 1:1, which means that the macromolecule contained about 50% by weight of a perfluoropolyether structure.

### EXAMPLES 7 TO 11

The following examples show the use of the products prepared according to the invention as additives for fluoroelastomeric compositions vulcanizable with peroxides, in order to improve some properties thereof.

By means of the conventional mixing techniques rubber compositions were prepared which comprised the ingredients indicated in table 1. Making use of the compositions thus prepared, the tests and determinations given in the table were carried out.

### Ingredients employed in the compositions

- Elastomer 1: CH₂=CF₂/C₃F₆/C₂F₄ terpolymer in a 2/1/1 molar ratio, containing, as a curing site, a brominated olefin, having a Mooney viscosity ML(1+4) at 100°C equal to 104 and a total bromine content of 0.36% by weight (VITON^{(R)}GF).
- Luperco^{(R)}101 XL: 2,5-dimethyl-2,5-di-(tert-1-butylperoxy)hexane: product at 45% by weight with 55% of an inert filler.
- TAIC: triallylisocyanurate.
- Black MT: carbon black for rubbers (ASTM N 990).
- Product 1: the compound prepared according to example 4.
- Product 2: the compound prepared according to example 6.
- Additive 1: brominated perfluoropolyether with a molecular weight equal to 800, as defined in example 6.

Reference example 7 reports the results obtained with a composition prepared and vulcanized according to the art with the peroxide system and a comparison is made with examples 8, 9 and 10, which contain product 1 and product 2 according to the invention.

Improvements are obtained as regards the processability, evidenced by a decrease of the Mooney viscosity of the compositions, the vulcanization rate, characterized by lower ts₅₀ values, without jeopardizing the maximum cross-linking yield (max. torque) in the extrudability test and in the detachability from the moulds; in the case of product 2, an improvement in the low temperature properties was also obtained.

Reference example 11 reports the results obtained by using only the brominated perfluoropolyether employed as an ingredient to prepare product 2 (see example 6) according to the known technique described in EP-A-222201 of applicant.

In this case, the volatility due to the low molecular weight, leads to the generation of smoke in the moulding step and in the post-vulcanization step in an oven.

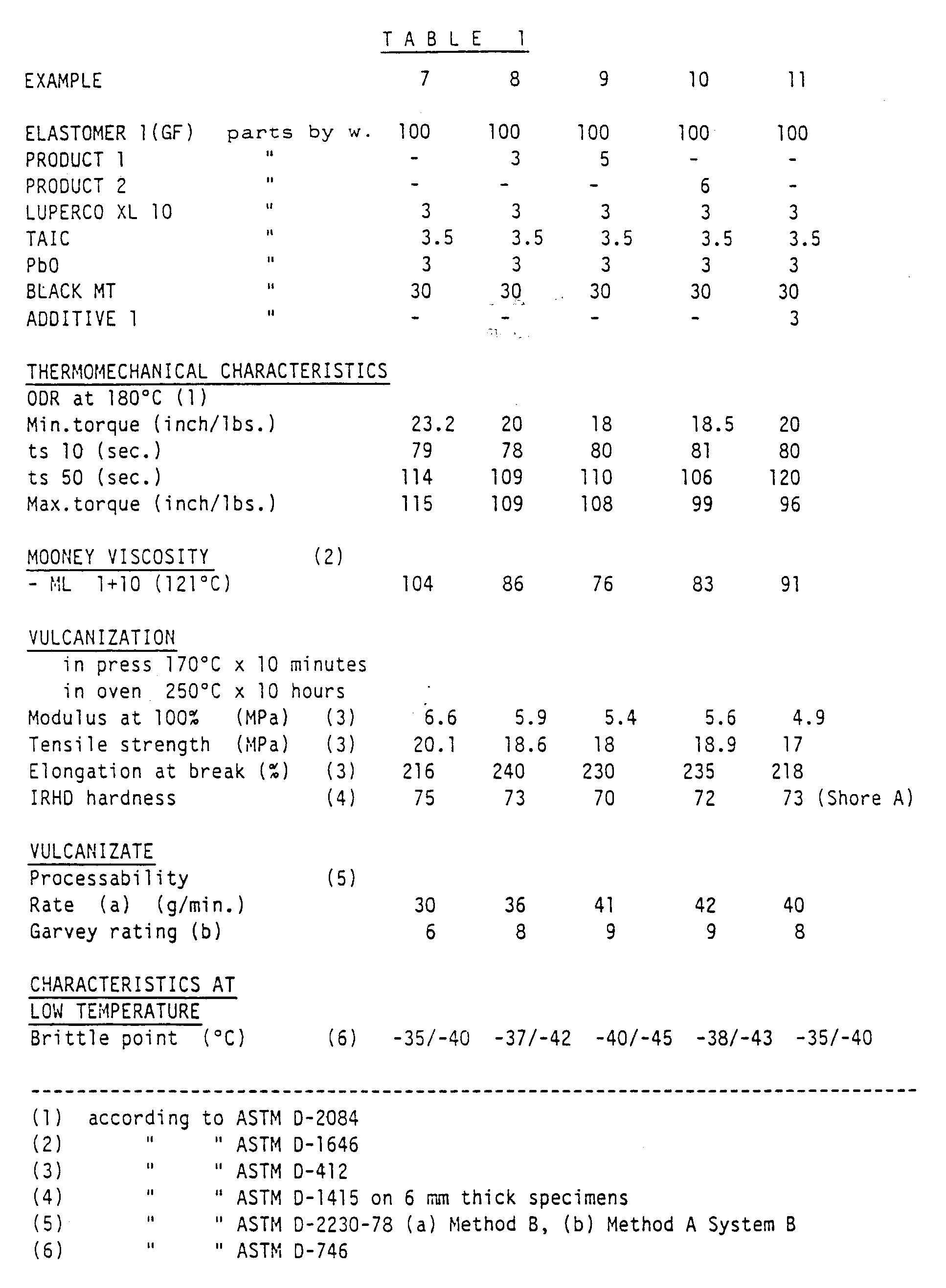

## Claims

1. Polymeric products containing a perfluoropolyether sequence and sequences of fluoroolefinic units or of mixed fluoroolefinic and olefinic units, said products having the general formulae:
(1) R_{f}-(P)ᵣ-Br
(2) R˝_{f}-(P)ᵣ-Br
(3) Br-(P)ᵣR′_{f}(P)ᵣ-Br
wherein r indicates the total number of monomeric units P derived from one or more (fluoro)olefins and ranges from 5 to 5000; R_{f}, R′_{f} and R˝_{f}, respectively, are perfluoropolyether blocks of general formula: 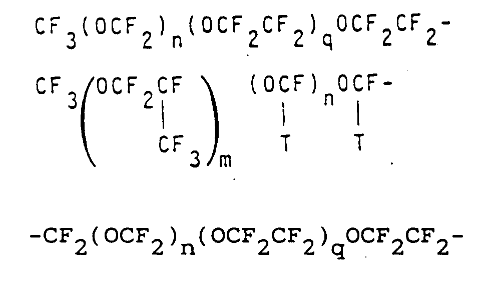 wherein T = F or CF₃; m, n and q are integers, including zero and are such that n+q and m+n have a value of at least 2 and at most 100, the perfluorooxyalkylene units being distributed at random along the perfluoropolyether chain.

2. A process for preparing the polymeric products of claim 1, which comprises polymerizing, in an inert fluorohydrocarbon or chlorofluorohydrocarbon solvent, one or more fluoroolefins or mixtures of fluoroolefin(s) and non-halogenated olefin(s), in the presence of a radical catalyst and a perfluoropolyether of general formula: 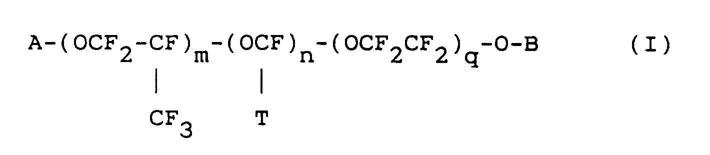 in which T = F or CF₃; m, n and q are integers, including zero, m+n+q ranges from 2 to 100 and A and B, which are either the same or different from each other, are selected from the group: 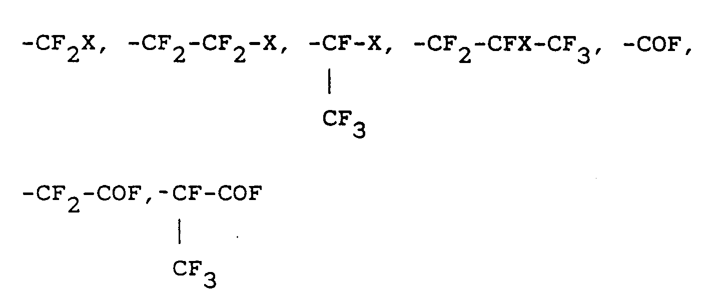 X being bromine or fluorine, provided that at least one end group contains Br.

3. Use of the products of claim 1 as additives for fluoroelastomer compositions vulcanizable with peroxides, in amounts of from 0.1 to 10 parts by weight per 100 parts by weight of fluoroelastomer.

## Patentansprüche

1. Polymere Produkte, die eine Perfluorpolyether-Abfolge und Abfolgen von Fluorolefin-Einheiten oder von gemischten Fluorolefin- und Olefin-Einheiten enthalten und die allgemeinen Formeln:
(1) R_{f}-(P)ᵣ-Br
(2) R''_{f}(P)ᵣ-Br
(3) Br-(P)ᵣR'_{f}(P)ᵣ-Br
aufweisen, worin r die Gesamtzahl der monomeren Einheiten P, die von einem oder mehreren (Fluor) olefinen abgeleitet sind, angibt und im Bereich von 5 bis 5000 liegt; R_{f}, R'_{f} bzw. R''_{f} Perfluorpolyether-Blöcke der allgemeinen Formel: 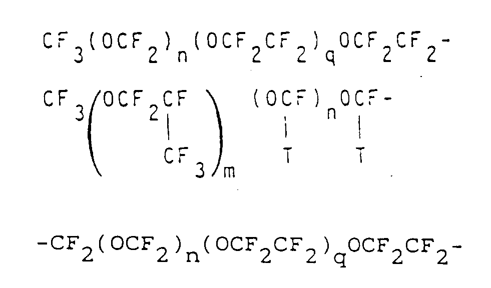 sind, worin T = F oder CF₃; m, n und q ganze Zahlen, einschließlich 0, und derart sind, daß n + q und m + n einen Wert von mindestens 2 und höchstens 100 aufweisen, wobei die Perfluoroxyalkylen-Einheiten statistisch entlang der Perfluorpolyetherkette verteilt sind.

2. Verfahren zur Herstellung der polymeren Produkte von Anspruch 1, umfassend die Polymerisation, in einem inerten Fluorkohlenwasserstoff- oder Chlorfluorkohlenwasserstoff-Lösungsmittel, eines oder mehrerer Fluorolefine oder von Mischungen von Fluorolefin(en) und nicht-halogeniertem bzw. nicht-halogenierten Olefin(en) in Anwesenheit eines Radikal-Katalysators und eines Perfluorpolyethers der allgemeinen Formel: 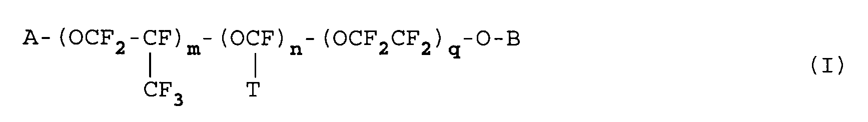 in welcher T = F oder CF₃; m, n und q ganze Zahlen, einschließlich 0, sind, m + n + q im Bereich von 2 bis 100 liegt und A und B, die gleich oder verschieden voneinander sind, ausgewählt sind aus der Gruppe: 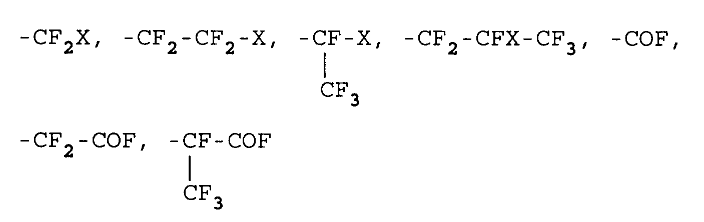 wobei X Brom oder Fluor ist, mit der Maßgabe, daß mindestens eine Endgruppe Br enthält.

3. Verwendung der Produkte von Anspruch 1 als Additive für mit Peroxiden vulkanisierbare Fluorelastomer-Zusammensetzungen in Mengen von 0,1 bis 10 Gewichtsteilen pro 100 Gewichtsteile Fluorelastomer.

## Revendications

1. Produits polymères contenant une séquence perfluoropolyéther et des séquences d'unités fluorooléfiniques ou d'unités oléfiniques et fluorooléfiniques mélangées, lesdits produits présentant les formules générales:
(1) R_{f}-(P)ᵣ-Br
(2) R''_{f}-(P)ᵣ-Br
(3) Br-(P)ᵣ-R'_{f}-(P)ᵣ-Br
dans lesquelles r indique le nombre total d'unités monomères P dérivées d'une ou de plusieurs (fluoro)oléfines et varie de 5 à 5000; R_{f}, R'_{f} et R''_{f}, sont respectivement des séquences perfluoropolyéther de formule générale: 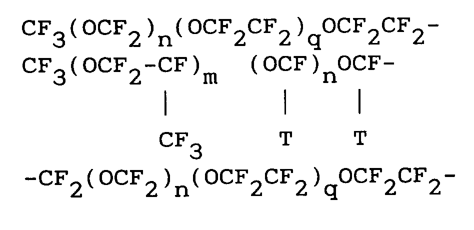 où T = F ou CF₃; m, n et q sont des entiers, incluant zéro, et sont tels que n+q et m+n ont une valeur d'au moins 2 et d'au plus 100, les unités perfluorooxyalkylène étant distribuées de façon statistique le long de la chaîne perfluoropolyéther.

2. Un procédé de préparation des produits polymères selon la revendication 1, qui comprend la polymérisation dans un solvant chlorofluorohydrocarboné ou fluorohydrocarboné inerte d'une ou de plusieurs fluoroléfines ou de mélanges de fluorooléfine(s) et d'oléfine(s) non-halogénée(s) en présence d'un catalyseur radicalaire et d'un perfluoropolyéther de formule générale: 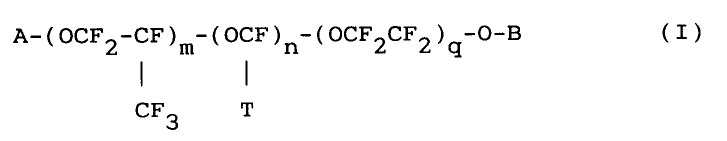 dans laquelle: T = F ou CF₃; m, n et q sont des entiers, incluant zéro, m+n+q varie de 2 à 100; A et B, qui sont soit identiques, soit différents l'un de l'autre, sont sélectionnés dans le groupe comprenant: 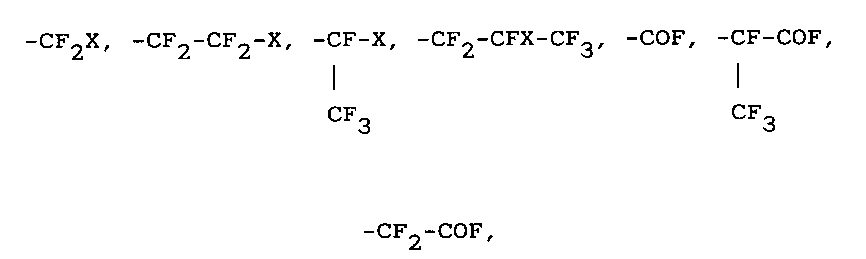 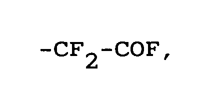 X étant un atome de brome ou un atome de fluor, pourvu qu'au moins un des groupes terminaux contienne Br.

3. Utilisation des produits selon la revendication 1 en tant qu'additifs pour les compositions de fluoroélastomères vulcanisables avec des peroxydes, en des quantités de 0,1 à 10 parties en poids pour 100 parties en poids de fluoroélastomères.
